Europäisches Patentamt

European Patent Office

Office européen des brevets

(11) Veröffentlichungsnummer: **0 400 698**

**A1**

## (12) EUROPÄISCHE PATENTANMELDUNG

(21) Anmeldenummer: **90201102.2**

(22) Anmeldetag: **02.05.90**

(51) Int. Cl.5: **B01J 8/04, B01D 53/36**

(30) Priorität: **27.05.89 DE 3917325**

(43) Veröffentlichungstag der Anmeldung:
**05.12.90 Patentblatt 90/49**

(84) Benannte Vertragsstaaten:
**DE FR GB IT**

(71) Anmelder: **METALLGESELLSCHAFT Aktiengesellschaft**
**Reuterweg 14**
**D-6000 Frankfurt am Main(DE)**

(72) Erfinder: **Dörr, Karl-Heinz**
**Am Gonsenheimer Spiess 6**
**D-6500 Mainz(DE)**
Erfinder: **Grimm, Hugo**
**Bornheimer Landstrasse 59**
**D-6000 Frankfurt am Main(DE)**
Erfinder: **Schalk, Wolfram**
**Geschwister Scholl Weg 4**
**D-6392 Neu Anspach 1(DE)**

(54) **Konverter für die katalytische Umsetzung von gasförmigen Bestandteilen in Gasen.**

(57) Der Konverter besteht aus einem stehenden zylinderförmigen Gehäuse (1), einer im Deckel des Gehäuses (1) angeordneten Gasleitung (2), einer im Gehäuse (1) um die Gasleitung (2) herum angeordneten ringförmigen Katalysatorschicht (3) zwischen gasdurchlässigen Wänden (4), auf dem Deckel des Gehäuses (1) angeordneten Einfüllstutzen (5) für die Katalysatormasse in die Katalysatorschicht (3), am Boden des Gehäuses (1) angeordnete Austragsstutzen (6) für die Katalysatormasse aus der Katalysatorschicht (3) und einer Gasleitung (7) im Mantel des Gehäuses (1). Zur Einhaltung des Umsatzgrades beim Auswechseln von verunreinigter Katalysatormasse ist der ringförmige Raum zwischen den gasdurchlässigen Wänden (4) durch senkrechte Bleche (8) in mehrere Kammern (9) eingeteilt, der obere Teil der ringförmigen Katalysatorschicht (3) im Gehäuse (1) zwischen ringförmigen gasundurchlässigen Wänden (10) angeordnet, und jede Kammer (9) mit einem Einfüllstutzen (5) und eine Austragsstutzen (6) für die Katalysatormasse versehen.

Fig.1

**Konverter für die katalytische Umsetzung von gasförmigen Bestandteilen in Gasen.**

Die Erfindung betrifft einen Konverter für die katalytische Umsetzung von gasförmigen Bestandteilen in Gasen, bestehend aus einem stehenden zylinderförmigen Gehäuse, einer im Deckel des Gehäuses angeordneten Gasleitung, einer im Gehäuse um die Gasleitung herum angeordneten ringförmigen Katalysatorschicht zwischen gasdurchlässigen Wänden, auf dem Deckel des Gehäuses angeordneten Einfüllstutzen für die Katalysatormasse in die Katalysatorschicht, am Boden des Gehäuses angeordnete Austragsstutzen für die Katalysatormasse aus der Katalysatorschicht und einer Gasleitung im Mantel des Gehäuses.

Die katalytische Umsetzung von Gasen erfolgt durch Hindurchleiten der Gase durch eine Katalysatorschicht aus Schüttgutkatalysatoren. Das Gas und die Katalysatorschicht müssen in Abhängigkeit von der Art des Katalysators und der ablaufenden Reaktion eine bestimmte Temperatur aufweisen. Anwendungsbeispiele sind die Oxidation von $SO_2$ zu $SO_3$ und die Reduktion von $NO_x$-Verbindungen. Gase, in denen diese Bestandteile vorliegen, fallen bei der Röstung von sulfidischen Erzen, der Schwefelverbrennung und als Rauchgase von Feuerungsanlagen an. Diese Gase und insbesondere die Rauchgase von Feuerungsanlagen enthalten -auch nach einer Gasreinigung - noch gewisse Mengen an staubförmigen Bestandteilen und an dampfförmigen Bestandteilen. Beim Durchgang durch die Katalysatorschicht lagert sich der Staub in der Katalysatorschicht ab und verursacht eine Erhöhung des Gasdurchgangswiderstandes. Die dampfförmigen Bestandteile können, je nach ihrer chemischen Zusammensetzung, zu einer Desaktivierung der Katalysatormasse führen. Aus diesem Grunde muß die Katalysatormasse nach einiger Zeit aus dem Konverter abgezogen, gereinigt, evtl. reaktiviert und dann wieder in den Konverter eingesetzt werden, wobei evtl. Verbrauch und Abrieb durch frische Katalysatormasse ersetzt wird. Da die Umsetzung der Gasbestandteile erst nach Aufheizung der Katalysatormasse auf eine bestimmte Temperatur erfolgt, erfolgt zunächst keine oder nur eine geringe Umsetzung in der frisch eingefüllten Katalysatormasse.

Aus der US-PS 1 995 292 und der US-PS 1 995 293 ist ein Konverter zur katalytischen Oxidation von $SO_2$ zu $SO_3$ bekannt, bei dem in einem Gehäuse eine ringförmige Katalysatorschicht zwischen gasdurchlässigen Wänden angeordnet ist. Die ringförmige Katalysatorschicht mündet am oberen Ende über einen konischen Zuführungsteil in einen Bunker, aus dem frische Katalysatormasse zugeführt wird und am unteren Ende über einen konischen Teil in einen Entnahmebunker. Die Zuführungsleitung für das Gas geht durch den Entnahmebunker und mündet in den freien Raum zwischen den Katalysatorschichten. Der Raum zwischen der Katalysatorschicht ist durch eine Trennwand unterteilt und das Gas wird dementsprechend zickzackförmig mehrmals durch die Katalysatorschicht geleitet. Die Leitung für die Abführung der Gase führt durch den oberen Bunker und mündet oben in den freien Raum zwischen der ringförmigen Katalysatorschicht. Die konische Zu- und Abführung der Katalysatormasse in die ringförmige Katalysatorschicht sowie die anschließenden Bunker erfordern eine große Bauhöhe des Konverters. Außerdem treten die eingangs geschilderten Nachteile beim Einfüllen von kalter Katalysatormasse auf, und ein gleichmäßiger Austausch der Katalysatormasse ist nicht gewährleistet.

Aus der DE-OS 29 21 024 ist ein Konverter bekannt, bei dem ebenfalls in einem Gehäuse eine ringförmige Katalysatorschicht zwischen gasdurchlässigen Wänden angeordnet ist. Im Innenraum ist ein Wärmeaustauscher angeordnet. Das Gas wird von der Seite tangential in das Gehäuse eingeleitet, durchströmt die Katalysatorschicht, wird durch den Wärmeaustauscher geleitet und tritt oben aus dem Gehäuse aus. Durch die tangentiale Gaseinführung und senkrechte Anordnung der Katalysatorschicht soll eine Verstaubung der Katalysatorschicht vermieden werden. Die Katalysatormasse wird durch oben angeordnete Stutzen in die Katalysatorschicht eingefüllt und durch unten angeordnete Stutzen aus der Katalysatorschicht abgezogen. Eine Reinigung und Wiedereinfüllung der Katalysatormasse ist nicht vorgesehen, jedoch würden bei einer solchen Arbeitsweise die eingangs beschriebenen Nachteile eintreten.

Der Erfindung liegt die Aufgabe zugrunde, den Abzug, die Aufarbeitung und das Wiedereinsetzen von Katalysatormasse in der Weise zu ermöglichen, daß keine Beeinträchtigung des Umsetzungsgrades der Katalyse erfolgt.

Die Lösung dieser Aufgabe erfolgt erfindungsgemäß dadurch, daß der ringförmige Raum zwischen den gasdurchlässigen Wänden durch senkrechte Bleche in mehrere Kammern eingeteilt ist, der obere Teil der ringförmigen Katalysatorschicht im Gehäuse zwischen ringförmigen gasundurchlässigen Wänden angeordnet ist, und jede Kammer mit einem Einfüllstutzen und einem Austragsstutzen für die Katalysatormasse versehen ist. Die Ausdrücke "zylinderförmig" und "ringförmig" beinhalten sowohl eine kreisrunde als auch eine mehreckige Ausgestaltung. Die gasdurchlässigen Wände können aus gelochten oder mit Schlitzen versehenen Blechen bestehen. Die die Kammern bildenden senkrechten Bleche können gasdurchlässig oder gasundurchlässig sein. Die ringförmigen gasdurchlässigen Wände und die ringförmigen gasundurchlässigen Wände, welche die Katalysatorschicht begrenzen, können als Einheit oder zusammengesetzt ausgebildet sein. Die senkrechten Bleche müssen sich bis in den oberen Teil der Katalysatorschicht zwischen den gasundurchlässigen Wänden erstrecken und können bis zur Decke des Gehäuses reichen. Die Einfüllstutzen für die Katalysatormasse werden mit gasdichten Verschlüssen ausgerüstet, die auch ein Einfüllen von Katalysatormasse nach teilweisem Abzug der Katalysatormasse ohne Gasaustritt ermöglichen. Die Austragsstutzen sind mit Verschlüssen versehen, die einen geregelten und gezielten Austrag der gewünschten Katalysatormenge ermöglichen. Der Deckel des Gehäuses wird so ausgestaltet, daß die gasundurchlässigen Wände des oberen Teiles der ringförmigen Katalysatorschicht vom Gas umströmt werden. Die Breite der Kammern wird je nach Rutschverhalten der verwendeten Katalysatormasse so gewählt, daß ein möglichst gleichmäßiger Abzug der Katalysatormasse aus den Kammern und eine möglichst gleichmäßige Einfüllung der Katalysatormasse in die Kammern erfolgt. Gaseinlaß und Gasauslaß können prinzipiell beliebig gewählt werden. Jedoch ist es von Vorteil, den Gaseinlaß im Deckel des Gehäuses und den Gasauslaß im Mantel des Gehäuses anzuordnen, weil dann im Innenraum ein beträchtlicher Teil des im Gas enthaltenen Staubes abgeschieden und durch eine Öffnung im Boden des Behälters entfernt werden kann. Der Boden des Behälters wird mit einer Neigung versehen, die ein Herabrutschen des Staubes bewirkt. Auf der Außenseite der Katalysatorschicht herabgefallener Staub kann auf dem Boden wieder in die Katalysatorschicht hineinrutschen und wird bei der Entleerung mitausgetragen.

Eine vorzugsweise Ausgestaltung besteht darin, daß die den oberen Teil der ringförmigen Katalysatorschicht umschließenden, ringförmigen, gasundurchlässigen Wände mindestens auf einem Teil ihrer Länge zum Deckel des Gehäuses hin sich erweiternd ausgebildet sind. Dadurch kann die zum Aufwärmen der Katalysatormasse auf die Betriebstemperatur erforderlichen Bauhöhe gering gehalten werden. Außerdem werden die Einfüllbedingungen verbessert.

Eine vorzugsweise Ausgestaltung besteht darin, daß das Verhältnis des Volumens der Kontaktmasse in der Katalysatorschicht zwischen den gasdurchlässigen Wänden zum Volumen der Katalysatormasse zwischen den gasundurchlässigen Wänden 19 bis 3 beträgt. Bei einer starken Verschmutzung bzw. Desaktivierung der Katalysatormasse wird im unteren Bereich gearbeitet und bei einer geringeren Verschmutzung bzw. Desaktivierung im oberen Bereich. Dadurch wird je nach Betriebsbedingungen eine möglichst gleichmäßige Umsatzrate eingehalten.

Eine vorzugsweise Ausgestaltung besteht darin, daß ein Teil der innenliegenden gasdurchlässigen Wand am Boden des Gehäuses gasundurchlässig ausgebildet ist. Dadurch wird eine gute Abführung des auf dem Boden des Gehäuses herunterrutschenden Staubes in der abgezogenen Katalysatormasse erzielt.

Eine Ausgestaltung besteht darin, daß im Gehäuse zwei ringförmige Katalysatorschichten mit unterschiedlichen Durchmessern angeordnet sind. Dadurch können zwei katalytische Reaktionen hintereinander durchgeführt werden.

Eine vorzugsweise Ausgestaltung besteht darin, daß die innere Katalysatorschicht aus einer Kontaktmasse zur Reduktion von $NO_x$ und die äußere Katalysatorschicht aus einer Kontaktmasse zur Oxidation von $SO_2$ besteht, der Gaseinlaß im Deckel des Gehäuses und der Gasauslaß im Mantel des Gehäuses angeordnet sind. Diese Anordnung ergibt optimale Bedingungen für die Behandlung von Rauchgasen aus Feuerungsanlagen. Die Anordnung der Kontaktmasse zur Reduktion von $NO_x$ als innere Katalysatorschicht mit geringerem Durchmesser ist vorteilhaft, weil das erforderliche Volumen dieser Kontaktmasse geringer ist als das Volumen der Kontaktmasse, die zur Oxidation von $SO_2$ zu $SO_3$ dient. Die Führung des Gases zunächst durch die Katalysatorschicht zur Reduktion von $NO_x$ und dann durch die Katalysatorschicht zur Oxidation von $SO_2$ hat den Vorteil, daß ein Überschuß von zur Reduktion von $NO_x$ zugesetztem Ammoniak in der äußeren Ratalysatorschicht oxidiert wird.

Ein vorzugsweises Verfahren zum Betrieb des Konverters besteht darin, daß aus den Austragsstutzen der Kammern maximal soviel verunreinigte Katalysatormasse abgezogen wird, wie im oberen Teil der Kammern zwischen den gasdurchlässigen Wänden vorhanden ist, durch die Einfüllstutzen frische Katalysatormasse in die Kammern nachgefüllt wird, und der Abzug von verunreinigter Katalysatormasse erst erfolgt, wenn die frische Katalysatormasse auf die Anspringtemperatur aufgeheizt ist. Dadurch wird erreicht, daß beim Auswechseln von verunreinigter Katalysatormasse gegen frische Katalysatormasse keine Beeinträchtigungen des Umsatzgrades der katalytischen Reaktion eintreten.

Das Abziehen und Reinigen der verunreinigten Katalysatormasse kann mittels eines zylinderförmigen Wechselbehälters erfolgen, in dem mit Abstand zur Behälterwandung innen ein Siebkorb aus Lochblech angeordnet ist. Der Wechselbehälter wird mit seiner Einfüllöffnung an einen Austragsstutzen angeschlossen und eine entsprechende Menge verunreinigter Katalysatormasse in den Siebkorb abgezogen. Nach Abkopplung vom Austragsstutzen und Verschließen der Einfüllöffnung erfolgt die Absiebung der Katalysatormasse von Verunreinigungen durch Schrägstellung und Rotation des Wechselbehälters. Das abgesiebte Feinkorn sammelt sich am Boden des Wechselbehälters und wird nach Beendigung der Siebung durch eine Austragsöffnung abgezogen. Danach wird der Wechselbehälter mit der Einfüllöffnung auf einen Einfüllstutzen der Katalysatorschicht gesetzt, und die gereinigte Katalysatormasse wieder in die Katalysatorschicht oben eingefüllt.

Die Erfindung wird anhand von Zeichnungen näher erläutert.

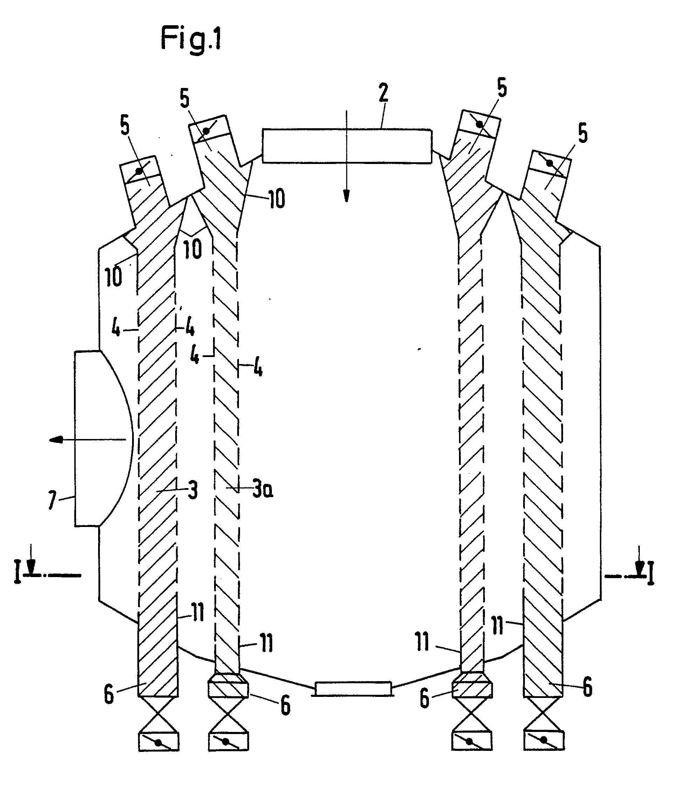

Fig. 1 ist ein Längsschnitt durch einen Konverter mit zwei Katalysatorschichten.

Fig. 2 ist ein Querschnitt gemäß I-I in Fig. 1.

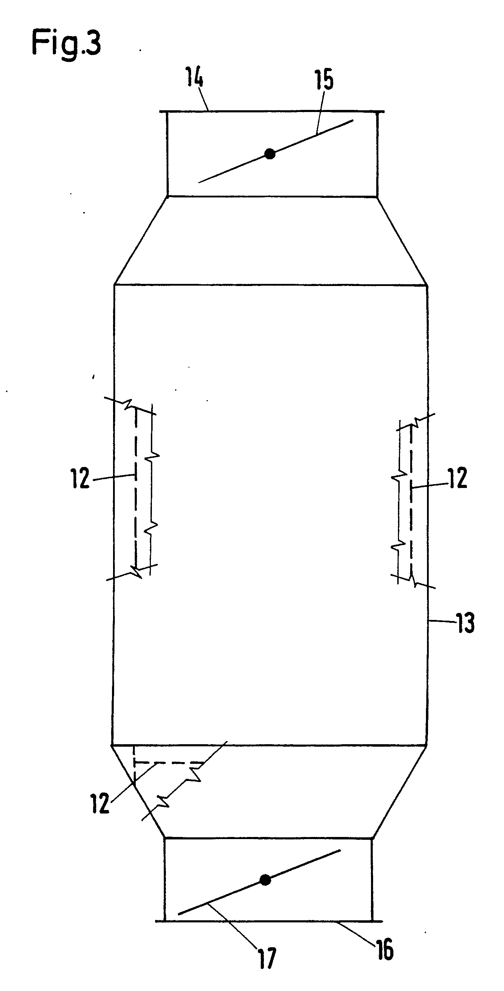

Fig. 3 zeigt eigen Wechselbehälter, wobei die Behälterwand teilweise geschnitten dargestellt ist.

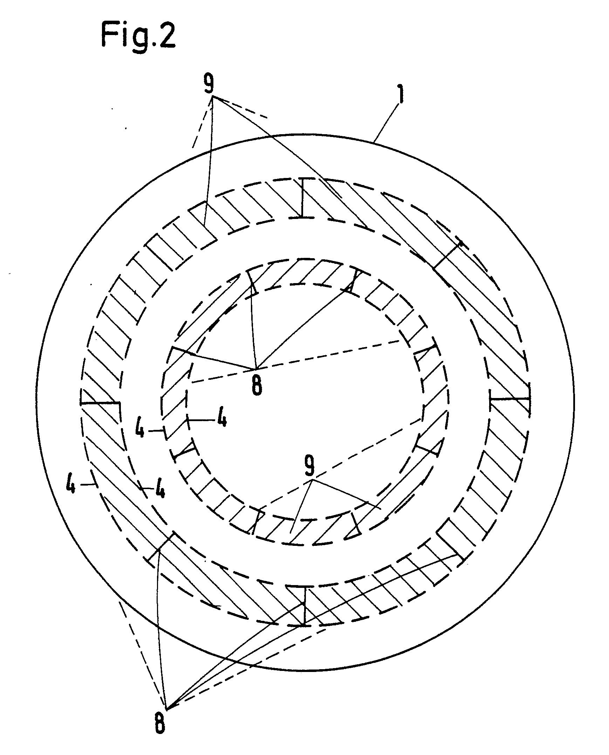

Im Deckel des zylinderförmigen Gehäuses (1) ist der Gaseinlaß (2) angeordnet. Im Gehäuse (1) sind eine ringförmige äußere Katalysatorschicht (3) zwischen gasdurchlässigen Wänden (4) und eine ringförmige innere Katalysatorschicht (3a) zwischen gasdurchlässigen Wänden (4) angeordnet. Auf dem Deckel des Gehäuses (1) sind über den Umfang der ringförmigen Katalysatorschichten verteilt mehrere Einfüllstutzen (5) für die Katalysatormasse in die Katalysatorschichten (3) und (3a) angeordnet. Am Boden des Gehäuses (1) sind entsprechend mehrere Austragsstutzen (6) für die Katalysatormasse aus der Katalysatorschicht (3) und (3a) angeordnet. Im Mantel des Gehäuses (1) ist der Gasauslaß (7) angeordnet. Der ringförmige Raum zwischen den gasdurchlässigen Wänden (4) ist durch senkrechte Bleche (8) in mehrere Kammern eingeteilt (Fig. 2). Der obere Teil der ringförmigen Katalysatorschichten (3, 3a) ist zwischen ringförmigen gasundurchlässigen Wänden (10) angeordnet, die auf einem Teil ihrer Länge zum Deckel des Gehäuses (1) hin sich erweiternd ausgebildet sind. Am Boden des Gehäuses (1) ist ein Teil der innenliegenden gasdurchlässigen Wände (4) gasundurchlässig ausgebildet.

In dem Wechselbehälter ist ein Siebkorb (12) mit Abstand zur Behälterwandung (13) angeordnet. In der Einfüllöffnung (14) ist eine Verschlußklappe (15) angeordnet. Die Einfüllöffnung (14) dient nach der Reinigung der Katalysatormasse als Entleerungsöffnung. Unter dem Boden des Siebkorbes (12) ist die Austragsöffnung (16) für das abgesiebte Feinkorn mit der Verschlußklappe (17) angeordnet. Die Vorrichtungen zum Transport und zur Rotation des Wechselbehälters sind nicht dargestellt.

Die Vorteile der Erfindung bestehen darin, daß verschmutzte oder desaktivierte Katalysatormasse abgezogen und durch frische Katalysatormasse ersetzt werden kann, ohne daß irgendeine Beeinflussung des Umsatzgrades während des Betriebes erfolgt.

## Ansprüche

1. Konverter für die katalytische Umsetzung von gasförmigen Bestandteilen in Gasen, bestehend aus einem stehenden zylinderförmigen Gehäuse (1), einer im Deckel des Gehäuses (1) angeordneten Gasleitung (2), einer im Gehäuse (1) um die Gasleitung (2) herum angeordneten ringförmigen Katalysatorschicht (3) zwischen gasdurchlässigen Wänden (4), auf dem Deckel des Gehäuses (1) angeordneten Einfüllstutzen (5) für die Katalysatormasse in die Katalysatorschicht (3), am Boden des Gehäuses (1) angeordnete Austragsstutzen (6) für die Katalysatormasse aus der Katalysatorschicht (3) und einer Gasleitung (7) im Mantel des Gehäuses (1), dadurch gekennzeichnet, daß der ringförmige Raum zwischen den gasdurchlässigen Wänden (4) durch senkrechte Bleche (8) in mehrere Kammern (9) eingeteilt ist, der obere Teil der ringförmigen Katalysatorschicht (3) im Gehäuse (1) zwischen ringförmigen gasundurchlässigen Wänden (10) angeordnet ist, und jede Kammer (9) mit einem Einfüllstutzen (5) und einem Austragsstutzen (6) für die Katalysatormasse versehen ist.

2. Konverter nach Anspruch 1, dadurch gekennzeichnet, daß die den oberen Teil der ringförmigen Katalysatorschicht (3) umschließenden, ringförmigen, gasundurchlässigen Wände (10) mindestens auf einem Teil ihrer Länge zum Deckel des Gehäuses (1) hin sich erweiternd ausgebildet sind.

3. Konverter nach Anspruch 1 oder 2, dadurch gekennzeichnet, daß das Verhältnis des Volumens der Kontaktmasse in der Katalysatorschicht zwischen den gasdurchlässigen Wänden (4) zum Volumen der Kontaktmasse zwischen den gasundurchlässigen Wänden (10) 19 bis 3 beträgt.

4. Konverter nach einem der Ansprüche 1 bis 3, dadurch gekennzeichnet, daß ein Teil (11) der innenliegenden gasdurchlässigen Wand (4) am Boden des Gehäuses (1) gasundurchlässig ausgebildet ist.

5. Konverter nach einem der Ansprüche 1 bis 4, dadurch gekennzeichnet, daß im Gehäuse (1) zwei ringförmige Katalysatorschichten (3, 3a) mit unterschiedlichen Durchmessern angeordnet sind.

6. Konverter nach einem der Ansprüche 1 bis 5, dadurch gekennzeichnet, daß die innere Katalysatorschicht (3a) aus einer Kontaktmasse zur Reduktion von $NO_x$ und die äußere Katalysatorschicht (3) aus einer Kontaktmasse zur Oxidation von $SO_2$ besteht, der Gaseinlaß (2) im Deckel des Gehäuses (1) und der Gasauslaß (7) im Mantel des Gehäuses (1) angeordnet ist.

7. Verfahren zum Betrieb des Konverters nach einem der Ansprüche 1 bis 6, dadurch gekennzeichnet, daß aus den Austragsstutzen (6) der Kammern (9) maximal soviel verunreinigte Katalysatormasse abgezogen wird, wie im oberen Teil der Kammern (9) zwischen den gasdurchlässigen Wänden (10) vorhanden ist, durch die Einfüllstutzen (5) frische Katalysatormasse in die Kammern (9) nachgefüllt wird, und der Abzug von verunreinigter Katalysatormasse erst erfolgt, wenn die frische Katalysatormasse auf die Anspringtemperatur aufgeheizt ist.

# Fig.1

# Fig.2

# Fig.3

Europäisches
Patentamt

**EUROPÄISCHER RECHERCHENBERICHT**

Nummer der Anmeldung

EP 90 20 1102

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| E | EP-A-0 319 743 (BAYER & METALLGESELLSCHAFT) * Auszug; Spalte 2, Zeile 34 - Spalte 3, Zeile 18; Spalte 3, Zeile 46 - Spalte 4, Zeile 16; Figuren 1,2 * --- | 1 | B 01 J 8/04 B 01 D 53/36 |
| A | RESEARCH DISCLOSURE, Nr. 180, April 1979, Seite 152, Zusammenfassung Nr. 18003; "Reactor with vertical catalyst beds" * Seite 152, Spalte 1, Figur 2 * --- | 1,4 | |
| A | CH-A- 343 377 (CIBA) * Seite 1, Zeilen 38-59; Seite 2, Zeilen 45-81; Seite 2, Zeile 89 - Seite 3, Zeile 44; Figuren 1,2 * --- | 1,2 | |
| A | US-A-3 436 192 (P.H. KARLSSON) * Figuren 1-3; Auszug; Spalte 2, Zeile 1 - Spalte 4, Zeile 40 * --- | 1,6 | RECHERCHIERTE SACHGEBIETE (Int. Cl.5) |
| A | PATENT ABSTRACTS OF JAPAN, Band 9, Nr. 74 (C-237)[1797], 3. April 1985; & JP-A-59 209 631 (NIPPON KOKAN K.K.) 28-11-1984 * Auszug; Figuren * ----- | 1,6 | B 01 D B 01 J |

Der vorliegende Recherchenbericht wurde für alle Patentansprüche erstellt

| Recherchenort | Abschlußdatum der Recherche | Prüfer |
|---|---|---|
| DEN HAAG | 03-09-1990 | SIEM T.D. |